# EUROPEAN PATENT APPLICATION

(11) **EP 4 597 735 A1**
(43) Date of publication of application: **06.08.2025**
(21) Application number: 23871753.2
(22) Date of filing: 04.09.2023
(51) Int. Cl.: H01M 50/533, H01M 50/107, H01M 50/152, H01M 50/342, H01M 50/545, H01M 50/559

(54) **CYLINDRICAL BATTERY**

(30) Priority: 30.09.2022 JP 2022157875
(71) Applicant: Panasonic Energy Co., Ltd., Osaka 570-8511 (JP)
(72) Inventor: YOSHIDA, Masayoshi, Osaka 571-0057 (JP)
(74) Representative: Eisenführ Speiser
(86) International application number: PCT/JP2023/032210
(87) International publication number: WO 2024/070513

(57) **Abstract**

This cylindrical battery (10) is provided with a positive electrode lead (20) which is led out from an electrode body (14) to a sealing body (17) side, and which is bonded to the inner surface of the sealing body (17). The sealing body (17), which closes an opening of an outer package can (16), has a projected part (40) that is arranged along a concentric circle of the outer circumference circle of the sealing body (17) on the electrode body (14)-side inner surface (30). The positive electrode lead (17) has, sequentially in the lead-out direction from the electrode body (14) side toward the sealing body (17) side, a first bent part (23) that is bent radially inward and a second bent part (24) that is bent into a generally U-shape toward the first bent part (23) side. The second bent part (24) overlaps with a region R, which is surrounded by the projected part (40), in the axial direction.

## Description

### TECHNICAL FIELD

The present disclosure relates to a cylindrical battery.

### BACKGROUND ART

Conventionally, as cylindrical batteries, there has been such a battery described in Patent Literature 1. This cylindrical battery comprises an electrode assembly, a bottomed cylindrical external can that accommodates the electrode assembly, and a sealing assembly that closes an opening of the external can. The sealing assembly is composed of a rupture plate and a positive electrode lead is joined to a lower surface of the sealing assembly.
The positive electrode lead extends from a positive electrode in an axial direction to pass through a through-hole of an upper insulating body, and is then bent at two locations before reaching a joining portion with the sealing assembly, and a U-shaped bent portion is formed at a position near the sealing assembly.

### CITATION LIST

### PATENT LITERATURE

PATENT LITERATURE 1: International Publication No. WO 2021/200440

### SUMMARY

As one method of increasing the rigidity of a sealing assembly, there is a method in which the thickness of the sealing assembly is increased. However, when the thickness of the sealing assembly is increased without changing the entire length of a cylindrical battery, the position of an inner surface of the sealing assembly is shifted toward the electrode assembly side to thus reduce the distance from the inner surface of the sealing assembly to the electrode assembly. In such a case, when the cylindrical battery receives vibration or impacts, a U-shaped bent portion of a positive electrode lead could be damaged. Such a problem could notably arise when the distance from the sealing assembly to the electrode assembly is designed to be short for the purpose of achieving a high capacity. Thus, it is an advantage of the present disclosure to provide a cylindrical battery capable of increasing the rigidity of a sealing plate and suppressing damage to a U-shaped bent portion of a lead.

To solve the aforementioned problem, a cylindrical battery of the present disclosure comprises: an electrode assembly in which a positive electrode and a negative electrode are wound via a separator; a bottomed cylindrical external can that accommodates the electrode assembly; a sealing assembly that closes an opening portion of the external can; and a lead that is drawn out from the electrode assembly to a side of the sealing assembly and that is joined to an inner surface of the sealing assembly, in which the sealing assembly includes one or more projecting portions arranged along a concentric circle of an outer circumference of the sealing assembly on the inner surface on a side of the electrode assembly, the lead includes a first bent portion and a second bent portion in this order along a drawing out direction from the side of the electrode assembly to the side of the sealing assembly, the first bent portion being inwardly bent in a radial direction, the second bent portion being bent in a substantially U-shape toward a side of the first bent portion, and the second bent portion overlaps a region surrounded by the one or more projecting portions in an axial direction.

Note that in the present specification, a region surrounded by one or more projecting portions is defined as a region surrounded by a circle inscribed in one or more projecting portions.

According to a cylindrical battery according to the present disclosure, the rigidity of a sealing plate may be increased and damage to a bent portion of a lead may be suppressed.

### BRIEF DESCRIPTION OF DRAWINGS

FIG. 1 is a sectional view in an axial direction of a cylindrical battery according to one embodiment of the present disclosure.
FIG. 2 is a perspective view of an electrode assembly of the aforementioned cylindrical battery.
FIG. 3 is a plan view of an inner surface of a sealing assembly of the aforementioned cylindrical battery as viewed from the axial direction.
FIG. 4 is a sectional view in an axial direction of a cylindrical battery of a first reference example.
FIG. 5 is a sectional view in the axial direction for explaining a problem in the cylindrical battery of the first reference example.
FIG. 6 is a sectional view in the axial direction for explaining another problem in a cylindrical battery of a second reference example.
FIG. 7 is a plan view of a sealing assembly of a modification corresponding to FIG. 3.
FIG. 8 is a sectional view in an axial direction of a cylindrical battery of another modification corresponding to FIG. 1.

### DESCRIPTION OF EMBODIMENT

Hereinafter, with reference to the drawings, an embodiment of a cylindrical battery according to the present disclosure will be described in detail. Note that the cylindrical battery of the present disclosure may be a primary battery or a secondary battery. Further, the cylindrical battery of the present disclosure may be a battery using an aqueous electrolyte or a battery using a non-aqueous electrolyte. Hereinafter, as a cylindrical battery 10 as one embodiment, a non-aqueous electrolyte secondary battery (lithium ion battery) using a non-aqueous electrolyte will be illustrated, but the cylindrical battery of the present disclosure is not limited thereto.

It has been initially expected that the characteristics of the embodiment and modifications described below are appropriately combined to form a new embodiment.
In the embodiment below, the same components in the drawings will be assigned the same reference signs and the overlapping descriptions will be omitted. Further, a plurality of drawings include schematic illustrations, and among the different drawings, the dimensional ratios in length, width, height, and the like of each member do not necessarily correspond. In the present specification, the side of a sealing assembly 17 in the axial direction (height direction) of the cylindrical battery 10 is assumed to be "up" and the side of a bottom 68 of an external can 16 in the axial direction is assumed to be "down". Further, of the constituent elements described below, the constituent elements that are not recited in independent claim showing the most generic concept are optional constituent elements, and are not essential constituent elements.

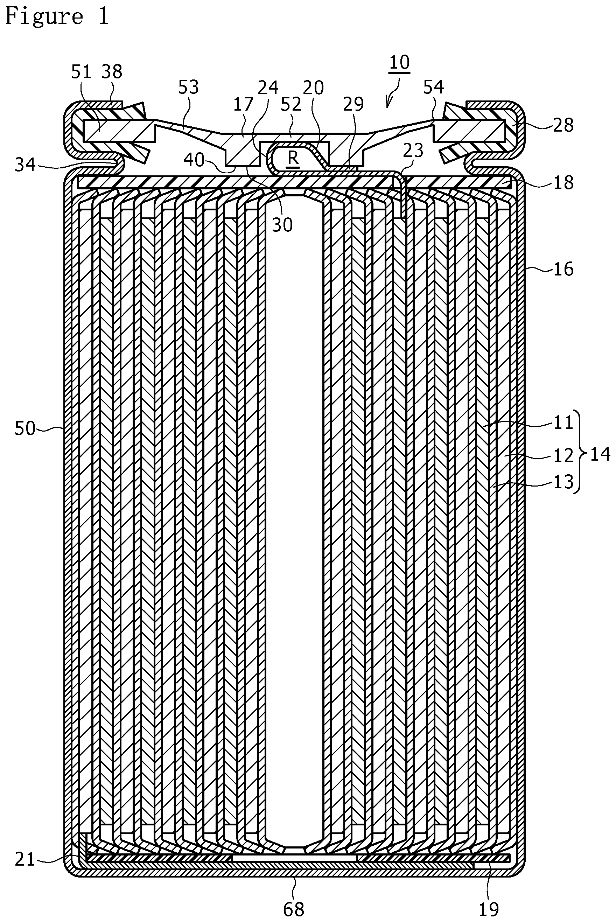

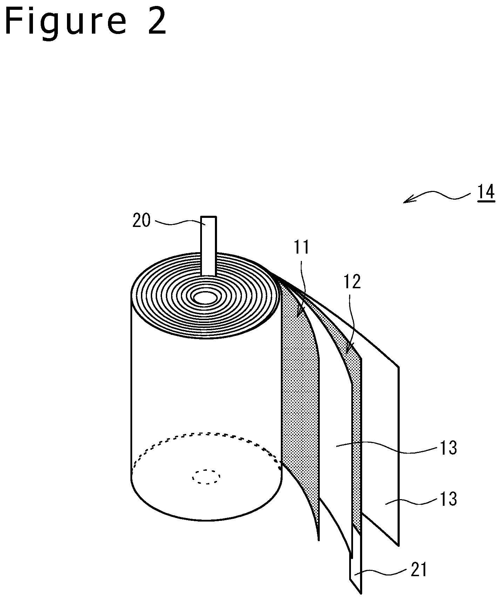

FIG. 1 is a sectional view in the axial direction of the cylindrical battery 10 according to one embodiment of the present disclosure, and FIG. 2 is a perspective view of an electrode assembly 14 of the cylindrical battery 10. As shown in FIG. 1, the cylindrical battery 10 comprises the wound-type electrode assembly 14, a non-aqueous electrolyte (not shown), the bottomed cylindrical metal external can 16 that accommodates the electrode assembly 14 and the non-aqueous electrolyte, and the sealing assembly 17 that seals an opening portion of the external can 16. As shown in FIG. 2, the electrode assembly 14 has a wound structure in which a long strip-shaped positive electrode 11 and a long strip-shaped negative electrode 12 are wound via two long strip-shaped separators 13.

The negative electrode 12 is formed in dimensions slightly larger than the positive electrode 11 in order to prevent lithium deposition. In other words, the negative electrode 12 is formed longer in the longitudinal direction and in the width direction (lateral direction) than the positive electrode 11. Further, the two separators 13 are formed in dimensions slightly larger than at least the positive electrode 11 and are disposed, for example, so as to sandwich the positive electrode 11. The negative electrode 12 may form a winding-start end of the electrode assembly 14. However, in general, the separator 13 extends beyond an end on a winding-start side of the negative electrode 12 and an end on a winding-start side of the separator 13 forms the winding-start end of the electrode assembly 14.

The non-aqueous electrolyte includes a non-aqueous solvent and electrolyte salt dissolved in the non-aqueous solvent. For the non-aqueous solvent, for example, esters, ethers, nitriles, amides, and any mixed solvent of two or more thereof may be used. The non-aqueous solvent may contain a halogen-substituted product formed by replacing at least a portion of a hydrogen atom of any of these solvents with a halogen atom such as fluorine. Note that the non-aqueous electrolyte is not limited to a liquid electrolyte and may be a solid electrolyte using a gel polymer or the like. For the electrolyte salt, lithium salt such as LiPF₆ is used.

The positive electrode 11 includes a positive electrode current collector and positive electrode mixture layers formed on both sides of the positive electrode current collector. For the positive electrode current collector, metal foil stable in a potential range of the positive electrode 11, such as aluminum and an aluminum alloy, a film with the metal disposed on the surface layer, and the like can be used. The positive electrode mixture layers include a positive electrode active material, a conductive agent, and a binding agent. The positive electrode 11 can be produced, for example, such that the positive electrode current collector is coated with positive electrode mixture slurry including the positive electrode active material, the conductive agent, the binding agent, and the like, and the coating is dried and is then compressed so that the positive electrode mixture layers are formed on both sides of the current collector.

The positive electrode active material includes a lithium-containing metal complex oxide as a main component. Examples of the metal element contained in the lithium-containing metal complex oxide may include Ni, Co, Mn, Al, B, Mg, Ti, V, Cr, Fe, Cu, Zn, Ga, Sr, Zr, Nb, In, Sn, Ta, and W. A preferable example of the lithium-containing metal complex oxide is a complex oxide containing at least one of the group consisting of Ni, Co, Mn, and Al.

Examples of the conductive agent included in the positive electrode mixture layer may include a carbon material, such as carbon black, acetylene black, ketjen black, and graphite. Examples of the binding agent included in the positive electrode mixture layer may include a fluorocarbon resin, such as polytetrafluoroethylene (PTFE) and polyvinylidene fluoride (PVdF), polyacrylonitrile (PAN), a polyimide resin, an acrylic resin, and a polyolefin resin. These resins and carboxymethylcellulose (CMC) or a cellulose derivative such as carboxymethylcellulose salt, a polyethylene oxide (PEO), and the like may be concurrently used.

The negative electrode 12 includes a negative electrode current collector and negative electrode mixture layers formed on both sides of the negative electrode current collector. For the negative electrode current collector, metal foil stable in a potential range of the negative electrode 12, such as copper and a copper alloy, a film with the metal disposed on the surface layer, and the like can be used. The negative electrode mixture layers include a negative electrode active material and a binding agent. The negative electrode 12 can be produced, for example, such that the negative electrode current collector is coated with negative electrode mixture slurry including the negative electrode active material, the binding agent, and the like, and the coating is dried and is then compressed so that the negative electrode mixture layers are formed on both sides of the current collector.

For the negative electrode active material, a carbon material that reversibly occludes and releases lithium ions is generally used. The preferable carbon material is graphite, such as natural graphite such as flake graphite, massive graphite, and amorphous graphite and artificial graphite such as massive artificial graphite and graphitized mesophase carbon microbeads. The negative electrode mixture layer may include, as the negative electrode active material, a Si material containing silicon (Si). In addition, for the negative electrode active material, metal to be alloyed with lithium other than Si, an alloy containing the metal, a compound containing the metal, and the like may be used.

For the binding agent included in the negative electrode mixture layer, a fluorocarbon resin, PAN, a polyimide resin, an acrylic resin, a polyolefin resin, and the like may be used, as with the case of the positive electrode 11, but styrene butadiene rubber (SBR) or a modified product thereof is preferably used. For the negative electrode mixture layer, for example, in addition to SBR or the like, CMC or CMC salt, polyacrylic acid (PAA) or polyacrylic acid salt, and polyvinyl alcohol may be included.

For the separator 13, a porous sheet having ion permeability and insulating property is used. Specific examples of the porous sheet may include a microporous thin film, cloth, and a nonwoven fabric. As a material of the separator 13, a polyolefin resin such as polyethylene and polypropylene, cellulose, and the like are preferable. The separator 13 may be in either a single layer structure or a stacked layer structure. On the surface of the separator 13, a heat-resistant layer and the like may be formed.

As shown in FIG. 1, a positive electrode lead 20 is joined to the positive electrode 11, and a negative electrode lead 21 is joined to an end portion on a winding-end side in a longitudinal direction of the negative electrode 12. The cylindrical battery 10 includes an insulating plate 18 above the electrode assembly 14 and an insulating plate 19 below the electrode assembly 14. One end portion of the positive electrode lead 20 is joined to the positive electrode current collector of the positive electrode 11 of the electrode assembly 14. In the present embodiment, the sealing assembly 17 is composed of only a single sealing plate (rupture plate). The positive electrode lead 20 passes through a through-hole of the insulating plate 18 to extend to the sealing assembly 17 side, and is then connected, by welding or the like, to an inner surface (lower surface) 30 on the electrode assembly 14 side in an axial direction of the sealing assembly 17 so that the sealing assembly 17 serves as a positive electrode terminal.

The positive electrode lead 20 is drawn out from the electrode assembly 14 toward the sealing assembly 17 side, and includes a first bent portion 23 that is inwardly bent in a radial direction and a second bent portion 24 that is bent in a substantially U-shape toward the first bent portion 23 side, in this order in the drawing out direction from the electrode assembly 14 side toward the sealing assembly 17 side.

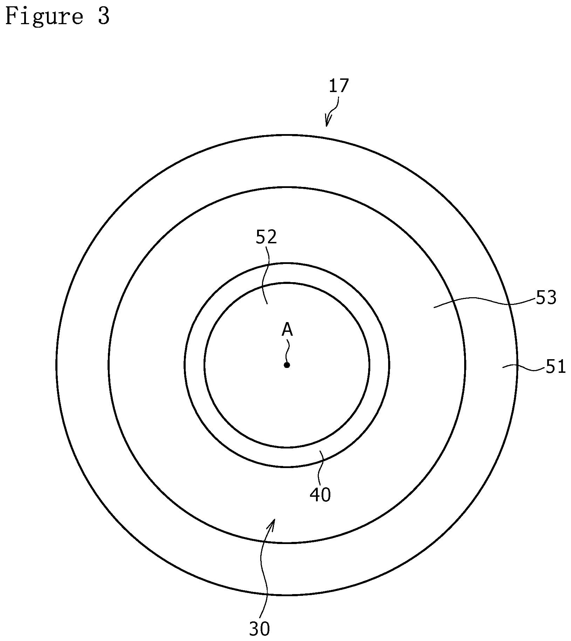

FIG. 3 is a plan view of the inner surface 30 of the sealing assembly 17 as viewed from the axial direction. As shown in FIG. 1 and FIG. 3, the sealing assembly 17 includes, on the inner surface 30, one circular (annular ring-shaped) projecting portion 40 disposed along a circle about a center A of an outer circumference of the sealing assembly 17. As shown in FIG. 1, the second bent portion 24 overlaps a region R surrounded by the circular projecting portion 40 in the axial direction. At this time, it is only necessary that an inflection point of the positive electrode lead 20 in the second bent portion 24 overlaps the region R in the axial direction. A distal end portion 29 of the positive electrode lead 20 is jointed to a tip surface of the circular projecting portion 40.

The negative electrode lead 21 passes an outer side of the insulating plate 19 and extends toward the bottom 68 side of the external can 16. The negative electrode lead 21 is connected, by welding or the like, to an inner surface of the bottom 68 of the metal external can 16 and the external can 16 serves as a negative electrode terminal. **In** the example shown in FIG. 1 and FIG. 2, the positive electrode lead 20 is electrically connected to an intermediate portion of a center portion and the like in the winding direction of the positive electrode current collector and the negative electrode lead 21 is electrically connected to the end portion on the winding-end side in the winding direction of the negative electrode current collector. However, the negative electrode lead may be electrically connected to the end portion on the winding-start side in the winding direction of the negative electrode current collector. Alternatively, the electrode assembly may have two negative electrode leads, with one negative electrode lead being electrically connected to the end portion on the winding-start side in the winding direction of the negative electrode current collector and with the other negative electrode lead being electrically connected to the end portion on the winding-end side in the winding direction of the negative electrode current collector. Alternatively, the negative electrode and the external can may be electrically connected by bringing the end portion on the winding-end side in the winding direction of the negative electrode current collector into contact with an internal surface of the external can.

As shown in FIG. 1 and FIG. 3, the sealing assembly (sealing plate) 17 includes an annular flange portion 51 formed on an outer side in a radial direction, a terminal portion 52 formed on an inner side in the radial direction, and an annular thinned portion 53 that connects the flange portion 51 and the terminal portion 52 and that is thinner than the terminal portion 52. As shown in FIG. 1, an upper surface and a lower surface of the thinned portion 53 are each an inclined surface displaced toward the upper side in the axial direction as the surfaces approach the outer side in the radial direction. The thickness in the axial direction of the thinned portion 53 is reduced toward the outer side in the radial direction.

The cylindrical battery 10 includes a resin gasket 28 disposed between the external can 16 and the sealing assembly 17. The flange portion 51 of the sealing assembly 17 is fixed by staking at the opening portion of the external can 16 via the gasket 28. In this manner, an interior space of the cylindrical battery 10 is sealed. The gasket 28 is sandwiched between the external can 16 and the flange portion 51 and insulates the sealing assembly 17 from the external can 16. The gasket 28 has a function as a sealing material for maintaining the air tightness inside the battery and a function as an insulating material for insulating between the external can 16 and the sealing assembly 17.

The external can 16 includes a shoulder portion 38, a grooved portion 34, a cylinder-shaped portion 50, and the bottom 68, and accommodates the electrode assembly 14 and a non-aqueous electrolyte. The grooved portion 34 can be formed by, for example, spinning a portion of a side wall of the external can 16 radially inward so as to annularly dent the portion radially inward. The shoulder portion 38 is formed such that in fixing the flange portion 51 to the external can 16 by staking, an upper end portion of the external can 16 is inwardly folded toward the flange portion 51.

When the cylindrical battery 10 extremely generates heat to increase the internal pressure of the cylindrical battery 10, the sealing assembly 17 is pressed upward with the pressure of gas and the thinned portion 53 is inverted, starting from an annular outer edge 54, from a state of being downwardly inclined from an outer side toward an inner side in the radial direction to a state of being upwardly inclined to thus break the outer edge 54 so that the gas is discharged. By discharging the gas as such, the cylindrical battery 10 can be prevented from rupturing due to an excessive increase in the internal pressure of the cylindrical battery 10, thereby being able to improve the safety of the cylindrical battery 10.

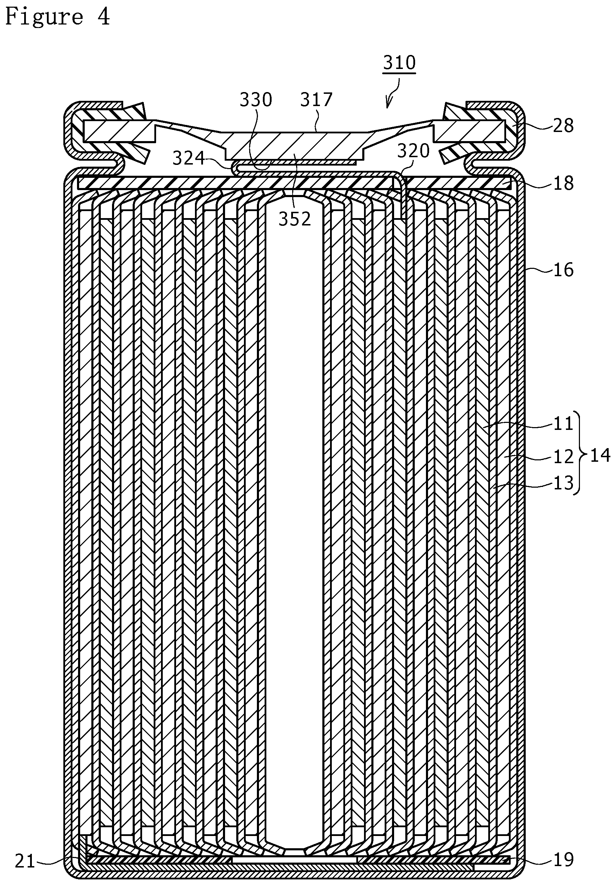

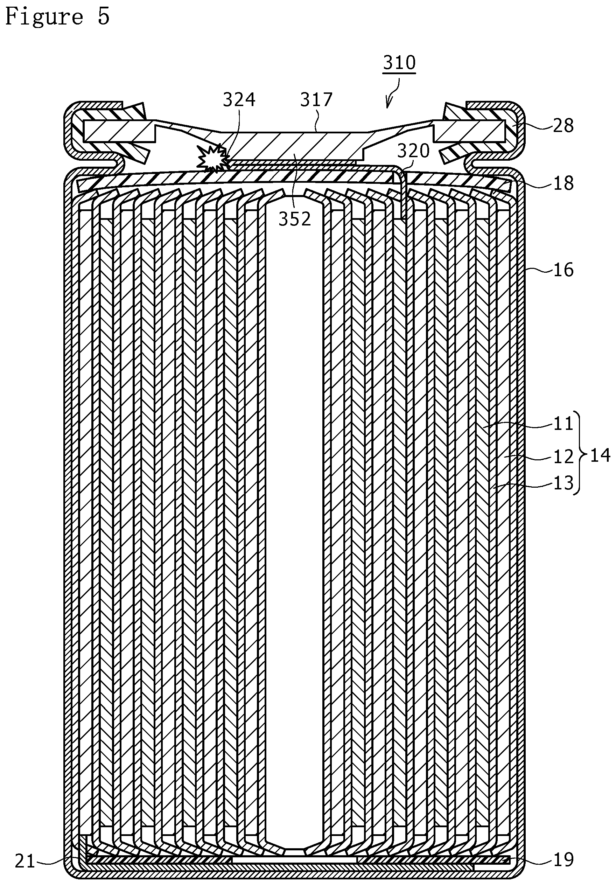

Next, function and effects of the cylindrical battery 10 will be described. FIG. 4 is a cross-sectional view in an axial direction of a cylindrical battery 310 of a first reference example. The cylindrical battery 310 differs from the cylindrical battery 10 in that an inner surface 330 of a sealing assembly (sealing plate) 317 does not have a projecting portion. In the cylindrical battery 310, to increase the rigidity of the sealing assembly 317, when the thickness of a terminal portion (lead joining portion) 352 of the sealing assembly 317 is increased without changing the entire length of the cylindrical battery 310, the position of the inner surface 330 of the sealing assembly 317 is shifted toward the electrode assembly 14 side, thereby reducing the distance from the terminal portion 352 to the electrode assembly 14. In such a case, when the cylindrical battery 310 receives vibration or impacts in the axial direction to thus further reduce the distance from the terminal portion 352 to the electrode assembly 14, as shown in FIG. 5, a U-shaped second bent portion 324 of a positive electrode lead 320 could be crushed in the axial direction to be damaged.

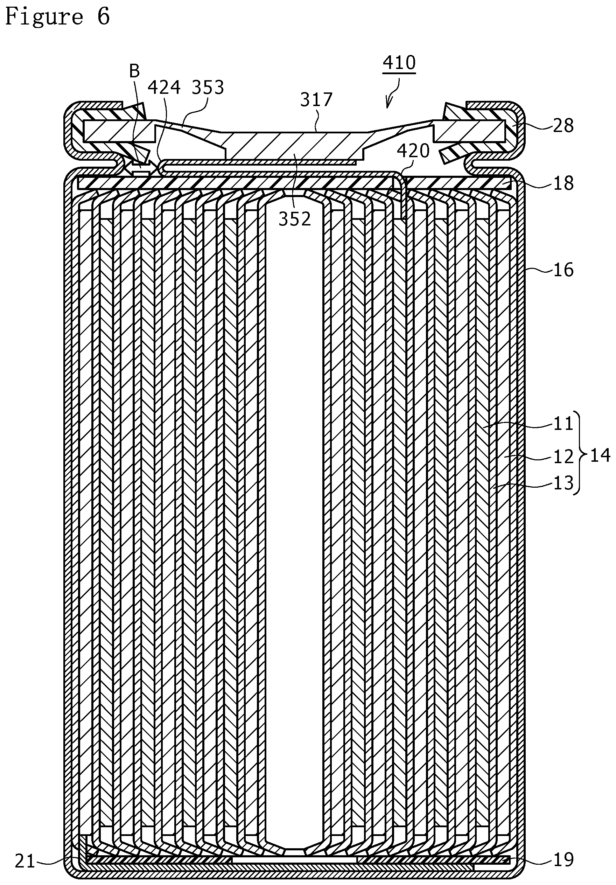

To avoid the aforementioned problem, when a U-shaped second bent portion 424 of a positive electrode lead 420 is disposed at a position with a wider space in the axial direction so as to overlap, in the axial direction, the thinned portion 353 present on an outer side in the radial direction of the terminal portion 352, as in a cylindrical battery 410 of a second reference example shown in FIG. 6, the distance (distance indicated by an arrow B) in the radial direction between the second bent portion 424 and an inner circumferential surface of the external can 16 is reduced. Accordingly, when the cylindrical battery 410 receives vibration or impacts in the radial direction, a short circuit between the positive electrode lead 320 and the external can 16 is more likely to occur.

By contrast, according to the cylindrical battery 10, since the sealing assembly 17 includes, on the inner surface 30, the circular projecting portion 40 disposed along a concentric circle of the outer circumference of the sealing assembly 17, the rigidity of the sealing assembly 17 can be increased. Further, since the second bent portion 24 overlaps, in the axial direction, the region R surrounded by the circular projecting portion 40, the second bent portion 24 is disposed in a space with a greater distance between the sealing assembly 17 and the electrode assembly 14. In this manner, even when the cylindrical battery 10 receives vibration or impacts in the axial direction, a strong load does not act on the second bent portion 24, thereby suppressing damage to the second bent portion 24. In addition, since the second bent portion 24 need not be disposed outwardly in the radial direction, a short circuit between the positive electrode lead 20 and the external can 16 is also effectively suppressed.

Note that the present disclosure is not limited to the aforementioned embodiment or the modifications thereof, and various improvements and changes are available within the scope of the matters described in the scope of claims of the present application and the equivalents thereof.

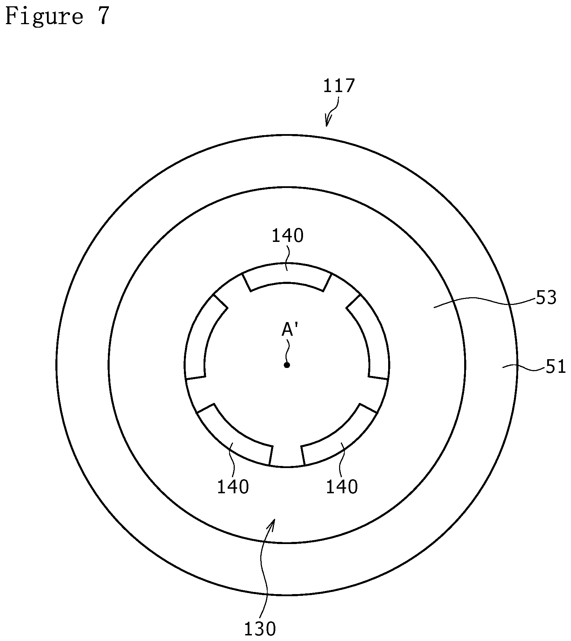

For example, in the aforementioned embodiment, the case has been described in which the sealing assembly 17 includes only one circular projecting portion 40. However, the sealing assembly only needs to include one or more projecting portions arranged along the concentric circle of the outer circumference of the sealing assembly on the inner surface on the electrode assembly side. For example, as shown in FIG. 7, a sealing assembly 117 may have a plurality of arc-shaped projecting portions 140 that are arranged, on an inner surface 130, along a circle about a center A' of an outer circumference of the sealing assembly 117, at an interval from each other in a circumferential direction. The plurality of arc-shaped projecting portions 140 are all preferably in the same shape and equidistantly arranged in the circumferential direction. Note that the plurality of arc-shaped projecting portions may have projecting portions in two or more different shapes and may not be equidistantly arranged.

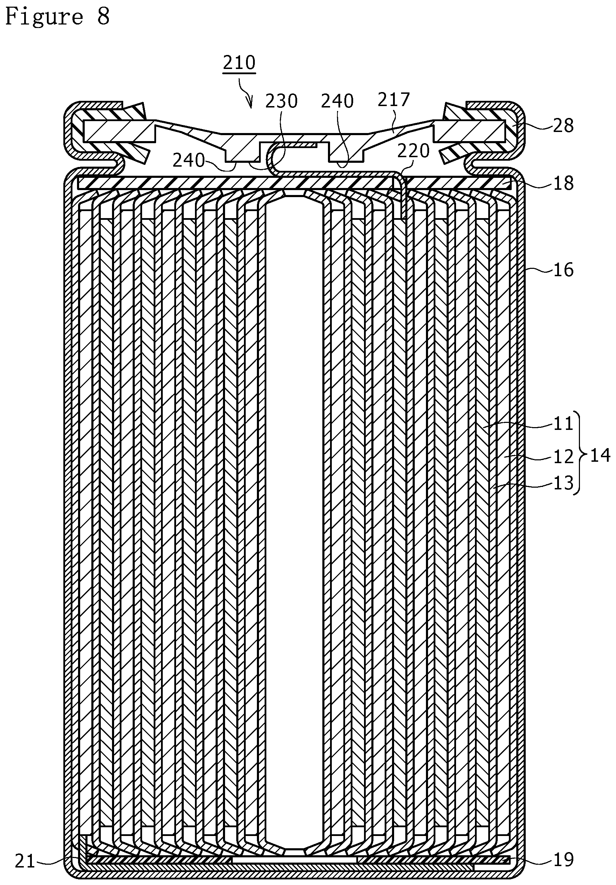

Further, the case has been described in which the positive electrode lead 20 is joined to the tip surface of the projecting portion 40 of the sealing assembly 17. However, as shown in FIG. 8, which is a sectional view in an axial direction of a cylindrical battery 210 of another modification corresponding to FIG. 1, a positive electrode lead 220 may be joined to a portion surrounded by projecting portions 240 on an inner surface 230 of a sealing assembly 217.

Furthermore, the case has been described in which the sealing assembly 17 is composed of one sealing plate (rupture plate). However, the sealing assembly may be composed of a plurality of members that are stacked. For example, the sealing assembly may comprise a rupture plate and a terminal cap positioned above the rupture plate.

Moreover, the case has been described in which the sealing assembly 17 forms the positive electrode terminal and the external can 16 forms the negative electrode terminal. However, the sealing assembly may form the negative electrode terminal and the external can may form the positive electrode terminal.

### REFERENCE SIGNS LIST

10, 210 Cylindrical battery, 11 Positive electrode, 12 Negative electrode, 13 Separator, 14 Electrode assembly, 16 External can, 17, 117, 217 Sealing assembly, 18, 19 Insulating plate, 20, 220 Positive electrode lead, 21 Negative electrode lead, 23 First bent portion, 24 Second bent portion, 28 Gasket, 29 Distal end portion of positive electrode lead, 30 Inner surface of sealing assembly, 34 Grooved portion, 38 Shoulder portion, 40, 140, 240 Projecting portion, 50 Cylinder-shaped portion, 51 Flange portion, 52 Terminal portion, 53 Thinned portion, 54 Outer edge, 68 Bottom

## Claims

1. A cylindrical battery, comprising:
an electrode assembly in which a positive electrode and a negative electrode are wound via a separator;
a bottomed cylindrical external can that accommodates the electrode assembly;
a sealing assembly that closes an opening portion of the external can; and
a lead that is drawn out from the electrode assembly to a side of the sealing assembly and that is joined to an inner surface of the sealing assembly, wherein
the sealing assembly includes one or more projecting portions arranged along a concentric circle of an outer circumference of the sealing assembly on the inner surface on a side of the electrode assembly,
the lead includes a first bent portion and a second bent portion in this order along a drawing out direction from the side of the electrode assembly to the side of the sealing assembly, the first bent portion being inwardly bent in a radial direction, the second bent portion being bent in a substantially U-shape toward a side of the first bent portion, and
the second bent portion overlaps a region surrounded by the one or more projecting portions in an axial direction.

2. The cylindrical battery according to Claim 1, wherein the sealing assembly includes only one of the projecting portions that is circular.

3. The cylindrical battery according to Claim 1, wherein the sealing assembly includesa plurality of the projecting portions arranged at an interval with each other in a circumferential direction.

4. The cylindrical battery according to any one of Claims 1 to 3, wherein the lead is joined to a tip surface of the projecting portions.
